(19) Europäisches Patentamt
European Patent Office
Office européen des brevets

(11) **EP 3 363 146 B1**

(12) **EUROPÄISCHE PATENTSCHRIFT**

(45) Veröffentlichungstag und Bekanntmachung des Hinweises auf die Patenterteilung:
**26.02.2020  Patentblatt 2020/09**

(51) Int Cl.:
*H04L 9/08* (2006.01)    *G05B 19/042* (2006.01)
*H04L 29/06* (2006.01)    *H04L 12/40* (2006.01)

(21) Anmeldenummer: **16781761.8**

(22) Anmeldetag: **12.10.2016**

(86) Internationale Anmeldenummer:
**PCT/EP2016/074469**

(87) Internationale Veröffentlichungsnummer:
**WO 2017/064120 (20.04.2017 Gazette 2017/16)**

(54) **VERFAHREN ZUR ERZEUGUNG EINES SCHLÜSSELS IN EINER SCHALTUNGSANORDNUNG**

METHOD FOR GENERATING A KEY IN A CIRCUIT ASSEMBLY

PROCÉDÉ DE GÉNÉRATION D'UNE CLÉ DANS UN AGENCEMENT DE CIRCUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2015  DE 102015220081**

(43) Veröffentlichungstag der Anmeldung:
**22.08.2018  Patentblatt 2018/34**

(73) Patentinhaber: **Robert Bosch GmbH**
**70442 Stuttgart (DE)**

(72) Erfinder:
• **HARTWICH, Florian**
**72762 Reutlingen (DE)**
• **LOTHSPEICH, Timo**
**71287 Weissach (DE)**
• **SOENKENS, Andreas**
**71686 Remseck Am Neckar (DE)**
• **KELLER, Thomas**
**78628 Rottweil (DE)**
• **MUTTER, Arthur**
**73765 Neuhausen (DE)**

(56) Entgegenhaltungen:
**DE-A1-102012 215 326    DE-A1-102013 221 583**

• **"Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]**
• **"BOSCH CAN SPECIFICATION VERSION 2.0", BOSCH CAN SPECIFICATION VERSION 2.0, XX, XX, 1. September 1991 (1991-09-01), Seiten 1-69, XP002291910,**

EP 3 363 146 B1

**Beschreibung**

Die vorliegende Erfindung betrifft ein Verfahren zur Erzeugung eines Geheimnisses in einem Netzwerk, insbesondere die Erzeugung eines gemeinsamen, geheimen Schlüssels in zwei Teilnehmern des Netzwerks. Auch Punkt-zu-Punkt-Verbindungen werden gewöhnlicher Weise zu den Netzwerken gezählt und sollen hier mit diesem Begriff ebenfalls adressiert sein. Dabei kommunizieren die beiden Teilnehmer über ein gemeinsam genutztes Übertragungsmedium. Hierbei werden logische Bitfolgen (bzw. allgemeiner: Wertfolgen) durch entsprechende Übertragungsverfahren als Signale bzw. Signalfolgen physikalisch übertragen. Das zugrundeliegende Kommunikationssystem kann z.B. ein CAN-Bus sein. Dieser sieht eine Übertragung dominanter und rezessiver Bits bzw. entsprechend dominanter und rezessiver Signale vor, wobei sich ein dominantes Signal bzw. Bit eines Teilnehmers des Netzwerks gegen rezessive Signale bzw. Bits durchsetzt. Ein Zustand entsprechend dem rezessiven Signal stellt sich auf dem Übertragungsmedium nur ein, wenn alle beteiligten Teilnehmer ein rezessives Signal zur Übertragung vorsehen bzw. wenn alle gleichzeitig sendenden Teilnehmer einen rezessiven Signalpegel übertragen.

Eine sichere Kommunikation zwischen verschiedenen Geräten wird in einer zunehmend vernetzten Welt immer wichtiger und stellt in vielen Anwendungsbereichen eine wesentliche Voraussetzung für die Akzeptanz und somit auch den wirtschaftlichen Erfolg der entsprechenden Anwendungen dar. Dies umfasst - je nach Anwendung - verschiedene Schutzziele, wie beispielsweise die Wahrung der Vertraulichkeit der zu übertragenden Daten, die gegenseitige Authentifizierung der beteiligten Knoten oder die Sicherstellung der Datenintegrität.

Zur Erreichung dieser Schutzziele kommen üblicherweise geeignete kryptographische Verfahren zum Einsatz, die man generell in zwei verschiedene Kategorien unterteilen kann: Zum einen symmetrische Verfahren, bei denen Sender und Empfänger über denselben kryptographischen Schlüssel verfügen, zum anderen asymmetrische Verfahren, bei denen der Sender die zu übertragenden Daten mit dem öffentlichen (d.h. auch einem potenziellen Angreifer möglicherweise bekannten) Schlüssel des Empfängers verschlüsselt, die Entschlüsselung aber nur mit dem zugehörigen privaten Schlüssel erfolgen kann, der idealerweise nur dem Empfänger bekannt ist.

Asymmetrische Verfahren haben unter anderem den Nachteil, dass sie in der Regel eine sehr hohe Rechenkomplexität aufweisen. Damit sind sie nur bedingt für ressourcenbeschränkte Knoten, wie z.B. Sensoren, Aktuatoren, o.ä., geeignet, die üblicherweise nur über eine relativ geringe Rechenleistung sowie geringen Speicher verfügen und energieeffizient arbeiten sollen, beispielsweise aufgrund von Batteriebetrieb oder dem Einsatz von Energy Harvesting. Darüber hinaus steht oftmals nur eine begrenzte Bandbreite zur Datenübertragung zur Verfügung, was den Austausch von asymmetrischen Schlüsseln mit Längen von 2048 Bit oder noch mehr unattraktiv macht.

Bei symmetrischen Verfahren hingegen muss gewährleistet sein, dass sowohl Empfänger als auch Sender über den gleichen Schlüssel verfügen. Das zugehörige Schlüsselmanagement stellt dabei generell eine sehr anspruchsvolle Aufgabe dar. Im Bereich des Mobilfunks werden Schlüssel beispielsweise mit Hilfe von SIM-Karten in ein Mobiltelefon eingebracht und das zugehörige Netz kann dann der eindeutigen Kennung einer SIM-Karte den entsprechenden Schlüssel zuordnen. Im Fall von Wireless LANs hingegen erfolgt üblicherweise eine manuelle Eingabe der zu verwendenden Schlüssel (in der Regel durch die Eingabe eines Passwortes) bei der Einrichtung eines Netzwerkes. Ein solches Schlüsselmanagement wird allerdings schnell sehr aufwändig und impraktikabel wenn man eine sehr große Anzahl von Knoten hat, beispielsweise in einem Sensornetzwerk oder anderen Maschine-zu-Maschine-Kommunikationssystemen, z.B. auch CANbasierten Fahrzeugnetzwerken. Darüber hinaus ist eine Änderung der zu verwendenden Schlüssel oftmals überhaupt nicht bzw. nur mit sehr großem Aufwand möglich. Bei aktuellen Verfahren werden die Schlüssel zentral erzeugt. Die Zuordnung zu einzelnen Steuergeräten erfolgt in sicherer Umgebung z. B. im Werk des Fahrzeugherstellers. Dort werden die Schlüssel auch aktiv geschaltet.

Verfahren zur Absicherung von Sensordaten gegen Manipulation und die Sicherstellung einer Transaktionsauthentifizierung, z.B. in einem Kraftfahrzeugnetzwerk, mit Hilfe gängiger Verschlüsselungsverfahren sind z.B. in der DE 102009002396 A1 und in der DE 102009045133 A1 offenbart.

Seit einiger Zeit werden zudem unter dem Schlagwort "Physical Layer Security" neuartige Ansätze untersucht und entwickelt, mit Hilfe derer Schlüssel für symmetrische Verfahren automatisch auf der Grundlage physikalischer Eigenschaften der Übertragungskanäle zwischen den involvierten Knoten erzeugt werden können. Dabei nutzt man die Reziprozität und die inhärente Zufälligkeit dieser Übertragungskanäle aus. Insbesondere bei drahtgebundenen oder optischen Systemen ist dieser Ansatz oftmals allerdings nur bedingt geeignet, da entsprechende Kanäle üblicherweise nur eine sehr eingeschränkte zeitliche Variabilität aufweisen und ein Angreifer beispielsweise mit Hilfe einer Modellbildung relativ gut Rückschlüsse auf die Kanalparameter zwischen dem Sender und dem Empfänger ziehen kann. Derartige Verfahren für eine abgesicherte Kommunikation in einem verteilten System auf Basis von Kanaleigenschaften der verbundenen Einheiten sind beispielsweise in den nicht vorveröffentlichten Anmeldungen DE 10 2014 208975 A1 sowie DE 10 2014 209042 A1 beschrieben.

Die nicht vorveröffentlichte DE 10 2015 207220 A1 offenbart ein Verfahren zur Erzeugung eines gemeinsamen Geheimnisses bzw. eines geheimen, symmetrischen Schlüssels mittels öffentlicher Diskussion zwischen zwei Kommunikationsteilnehmern. DE 10 2013 221583 A1 offenbart eine Batterie mit einer Vorrichtung zur digitalen Übertragung von Strom-Messwerten, eine Batteriesteuerung mit einer Vorrichtung zum Empfangen einer digitalen Übertragung von Strom-Messwerten, sowie Verfahren zur gesicherten digitalen Übertragung von Strom-Messwerten.

Offenbarung der Erfindung

Die vorliegenden Erfindung wird durch ein Verfahren zur Generierung eines Schlüssels gemäß Anspruch 1, ein nebengeordnetes Computerprogramm gemäß Anspruch 21 und eine Schaltungsanordnung gemäß Anspruch 22 beschrieben. Bevorzugt Ausführungsformen sind in den abhängigen Ansprüchen definiert. Die vorgestellten Verfahren zur Generierung eines Geheimnisses bzw. eines kryptographischen Schlüssels erfordern keinerlei manuellen Eingriff und ermöglichen somit den automatisierten Aufbau sicherer Kommunikationsbeziehungen bzw. -verbindungen zwischen zwei Knoten. Zudem weisen die Verfahren eine sehr geringe Komplexität auf, insbesondere hinsichtlich der erforderlichen Hardwareauslegung, wie z.B. der benötigten Speicherressourcen und Rechenleistung, und sie gehen mit einem geringen Energie- und Zeitbedarf einher. Darüber hinaus bieten die Verfahren sehr hohe Schlüsselgenerierungsraten bei gleichzeitig sehr kleiner Fehlerwahrscheinlichkeit.

Dabei gehen die Verfahren davon aus, dass Teilnehmer in einem Netzwerk über einen Kommunikationskanal miteinander kommunizieren. Sie übertragen dabei insbesondere logische Wertfolgen, (falls es sich um binäre Logik handelt, Bitfolgen) mit Hilfe von physikalischen Signalen auf dem Übertragungskanal. Auch wenn mögliche Überlagerungen auf dem Übertragungskanal durch die Signale, also auf der physikalischen Ebene, stattfinden, wird in der Beschreibung im Folgenden vorranging die logische Ebene betrachtet. Es werden somit die übertragenen, logischen Wertfolgen sowie deren logische Überlagerung betrachtet.

Teilnehmer des Netzwerks können somit erste Signale (die beispielsweise dem logischen Bit "1" zugeordnet sind) und zweite Signale (die beispielsweise dem logischen Bit "0" zugeordnet sind) auf den Kommunikationskanal geben und resultierende Signale auf dem Kommunikationskanal detektieren. Übertragen nun zwei Teilnehmer (weitgehend) gleichzeitig jeweils eine Signalfolge, so können die Teilnehmer die daraus resultierende Überlagerung auf dem Kommunikationskanal detektieren. Das effektive, aus der (weitgehend) gleichzeitigen Übertragung zweier (unabhängiger) Signale resultierende Signal auf dem Kommunikationskanal lässt sich dann wiederum einem (oder mehreren) bestimmten logischen Wert (oder Werten) zuordnen.

Die Übertragung muss dabei insofern weitgehend synchron sein, dass eine Überlagerung der einzelnen Signale einer Signalfolge auf dem Übertragungsmedium erfolgt, insbesondere, dass sich das Signal entsprechend dem n-ten logischen Wert bzw. Bit des ersten Teilnehmers mit dem Signal entsprechend dem n-ten logischen Wert bzw. Bit des zweiten Teilnehmers zumindest teilweise überlagert. Diese Überlagerung sollte jeweils dafür ausreichend lange sein, dass die Teilnehmer die Überlagerung erfassen bzw. den entsprechenden Überlagerungswert ermitteln können.

Die Überlagerung kann dabei durch Arbitrierungsmechanismen oder durch physikalische Signalüberlagerung bestimmt sein. Mit Arbitrierungsmechanismus ist beispielsweise der Fall gemeint, dass ein Knoten einen rezessiven Pegel anlegen möchte, aber auf dem Bus einen dominanten Pegel detektiert und somit die Übertragung unterlässt. In diesem Fall kommt es zu keiner physikalischen Überlagerung zweier Signale, sondern es ist nur das dominante Signal auf dem Übertragungskanal zu sehen.

Aus der resultierenden Wertfolge der Überlagerung und der eigenen Wertfolge können die Teilnehmer dann einen Schlüssel generieren, der einem außenstehenden Angreifer gegenüber geheim ist. Grund dafür ist, dass der außenstehende Angreifer, der beispielsweise die auf dem gemeinsam genutzten Übertragungsmedium anliegenden effektiven Gesamtsignale abhören kann, nur die Überlagerung der Wertfolgen sieht, aber nicht die Informationen über die einzelnen Wertfolgen der Teilnehmer hat. Damit verfügen die Teilnehmer über mehr Informationen, die sie gegenüber dem Angreifer zur Generierung eines geheimen Schlüssels nutzen können.

Da es sich bei den Verfahren allerdings insbesondere um Security-Verfahren handelt, welche die Generierung eines kryptographischen Schlüssel z.B. für eine verschlüsselte oder über eine Nachrichtenauthentifizierung abgesicherte Kommunikation zum Ziel haben, ist es besonders vorteilhaft, die Zuverlässigkeit dieser Verfahren durch geeignete Fehlerüberprüfungen zu vergrößern. Die Widerstandsfähigkeit der Verfahren gegen Angriffe und Manipulationen wird damit gestärkt. Durch geeignete und abgestufte Fehlerreaktion kann trotzdem die Verfügbarkeit des Systems hoch gehalten werden.

Die beschriebenen Verfahren sind besonders gut in einem CAN-, TTCAN- oder CAN-FD-Bussystem umzusetzen. Hier wird ein rezessiver Buspegel durch einen dominanten Buspegel verdrängt. Die Überlagerung von Werten bzw. Signalen der Teilnehmer folgt damit festgelegten Regeln, welche die Teilnehmer zur Ableitung von Informationen aus dem überlagerten Wert bzw. Signal und dem von ihnen übertragenen Wert bzw. Signal nutzen können. Auch für weitere Kommunikationssysteme wie LIN und I2C sind die Verfahren gut geeignet.

Während das Verfahren für zwei Teilnehmer in einem Netzwerk beschrieben wurde, kann auch bereits durch einen Teilnehmer eines Netzwerks ein geheimer Schlüssel aus einer eigenen Signalfolge und aus einer Überlagerung dieser mit der Signalfolge eines zweiten Teilnehmers abgeleitet werden. Ein Netzwerk oder ein Teilnehmer eines Netzwerks sind hierzu eingerichtet, indem sie über elektronische Speicher- und Rechenressourcen verfügen, die Schritte eines entsprechenden Verfahrens auszuführen. Auf einem Speichermedium eines solchen Teilnehmers oder auf den verteilten Speicherressourcen eines Netzwerks kann auch ein Computerprogramm abgelegt sein, dass dazu eingerichtet ist, alle Schritte eines entsprechenden Verfahrens auszuführen, wenn es in dem Teilnehmer oder in dem Netzwerk abgearbeitet wird.

Zeichnungen

Nachfolgend ist die Erfindung unter Bezugnahme auf die beiliegenden Zeichnungen und anhand von Ausführungsbeispielen näher beschrieben. Dabei zeigen

Fig. 1 schematisch den Aufbau eines beispielhaften, zugrundeliegenden Kommunikationssystems,

Fig. 2 schematisch einen linearen Bus als Beispiel eines zugrundeliegenden Kommunikationssystems,

Fig. 3 schematisch beispielhafte Signalfolgen zweier Teilnehmer eines Netzwerks sowie eine resultierende Überlagerungswertfolge auf einem Übertragungskanal zwischen den Teilnehmern,

Fig. 4 schematisch den Ablauf eines beispielhaften Verfahrens zur Schlüsselgenerierung zwischen zwei Teilnehmern eines Netzwerks,

Fig. 5 ein beispielhaftes Kommunikationsmodul als Teil einer Schaltungsanordnung eines Netzwerkteilnehmers,

Fig. 6 ein beispielhaftes Modul zur Generierung eines Geheimnisses bzw. zum Schlüsselaustausch, insbesondere zur Veranlassung einer synchronen Kommunikation, (weiteres Modul) als Teil einer Schaltungsanordnung eines Netzwerkteilnehmers und

Fig. 7 einen beispielhaften Ablauf eines Verfahrens zur Diagnose bzw. Fehlererkennung im Rahmen eines Verfahrens zur Schlüsselgenerierung.

Beschreibung der Ausführungsbeispiele

Die vorliegende Erfindung bezieht sich auf ein Verfahren zur Generierung eines gemeinsamen Geheimnisses bzw. (geheimer) symmetrischer kryptographischer Schlüssel zwischen zwei Knoten eines Kommunikationssystems (Teilnehmer eines Netzwerkes), die über ein gemeinsam genutztes Medium (Übertragungskanal des Netzwerks) miteinander kommunizieren. Die Generierung bzw. Aushandlung der kryptographischen Schlüssel basiert dabei auf einem öffentlichen Datenaustausch zwischen den zwei Teilnehmern, wobei es einem möglichen mithörenden Dritten als Angreifer aber dennoch nicht oder nur sehr schwer möglich ist, Rückschlüsse auf die generierten Schlüssel zu ziehen. Somit ist es möglich, zwischen zwei verschiedenen Teilnehmern eines Netzwerks vollständig automatisiert und sicher entsprechende symmetrische kryptographische Schlüssel zu etablieren, um darauf aufbauend dann bestimmte Sicherheitsfunktionen, wie z.B. eine Datenverschlüsselung, zu realisieren. Wie im Detail noch beschrieben wird hierzu zunächst ein gemeinsames Geheimnis etabliert, welches zur Schlüssel-generierung herangezogen werden kann. Ein solches gemeinsames Geheimnis kann aber grundsätzlich auch zu anderen Zwecken als für kryptographische Schlüssel im engeren Sinne genutzt werden, z.B. als One-Time-Pad.

Die Verfahren eignen sich für eine Vielzahl drahtgebundener oder drahtloser sowie auch optischer Netzwerke bzw. Kommunikationssysteme, insbesondere auch solche, bei denen die verschiedenen Teilnehmer über einen linearen Bus miteinander kommunizieren und der Medienzugriff auf diesen Bus mithilfe einer bitweisen Bus-Arbitrierung erfolgt. Dieses Prinzip stellt beispielsweise die Grundlage des weit verbreiteten CAN-Busses dar. Mögliche Einsatzgebiete umfassen dementsprechend insbesondere auch CAN-basierte Fahrzeugnetzwerke sowie CAN-basierte Netzwerke in der Automatisierungstechnik.

Mit den beschriebenen Verfahren können automatisiert symmetrische kryptographische Schlüssel in einem, bzw. insbesondere zwischen zwei Knoten eines Netzwerks generiert werden. Diese Generierung erfolgt dabei unter Ausnutzung von Eigenschaften der entsprechenden Übertragungsschicht. Anders als bei den gängigen Ansätzen der "Physical Layer Security" werden dafür aber nicht physikalische Parameter des Übertragungskanals wie Übertragungsstärke etc. ausgewertet. Vielmehr gibt es dazu einen öffentlichen Datenaustausch zwischen den beteiligten Knoten, der dank der Eigenschaften des Kommunikationssystems und/oder des verwendeten Modulationsverfahrens einem möglichen lauschenden Angreifer keine, bzw. keine ausreichenden Rückschlüsse auf den daraus ausgehandelten Schlüssel ermöglicht.

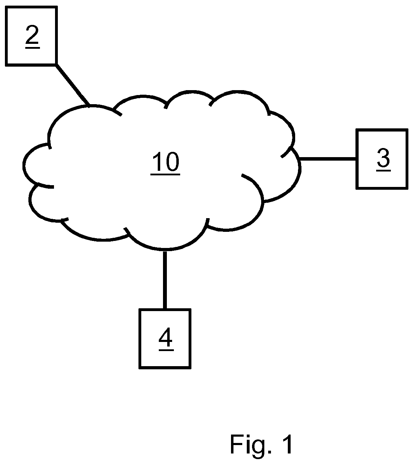

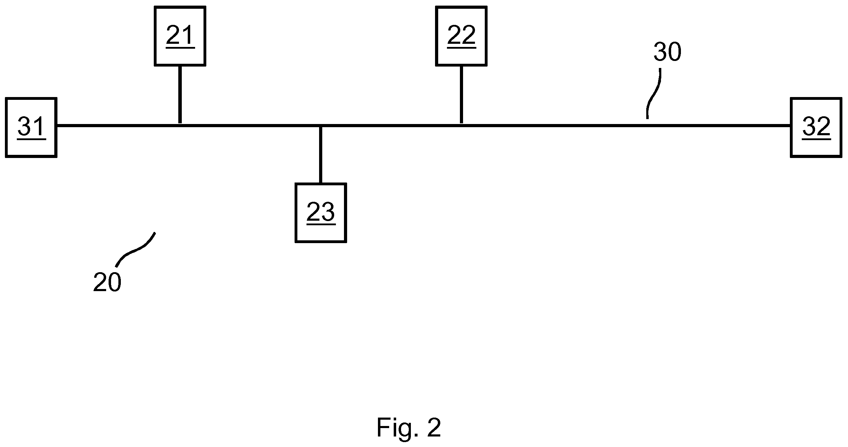

Im Folgenden wird eine Anordnung betrachtet, wie sie abstrakt in Fig. 1 dargestellt ist. Dabei können verschiedene Teilnehmer 2, 3 und 4 über ein so genanntes geteiltes Übertragungsmedium ("shared medium") 10 miteinander kommunizieren. In einer vorteilhaften Ausprägung der Erfindung entspricht dieses geteilte Übertragungsmedium einem linearen Bus (drahtgebunden oder optisch) 30, wie er beispielhaft in Fig. 2 dargestellt ist. Das Netzwerk 20 in Fig. 2 besteht aus eben diesem linearen Bus 30 als geteiltes Übertragungsmedium (beispielsweise als drahtgebundener Übertragungskanal), Teilnehmern bzw. Knoten 21, 22 und 23 sowie (optionalen) Busterminierungen 31 und 32.

Im Folgenden wird für die Kommunikation zwischen den verschiedenen Knoten 21, 22 und 23 angenommen, dass sie durch die Unterscheidung von dominanten und rezessiven Werten gekennzeichnet ist. In diesem Beispiel werden als mögliche Wert die Bits "0" und "1" angenommen. Dabei kann ein dominantes Bit (z.B. das logische Bit '0') ein gleichzeitig übertragenes rezessives Bit (z.B. das logische Bit '1') quasi verdrängen bzw. überschreiben.

Ein Beispiel für ein solches Übertragungsverfahren ist das so genannte On-Off-Keying (On-Off-Keying-Amplitudenumtastung), bei dem genau zwei Übertragungszustände unterschieden werden: Im ersten Fall (Wert 'On', bzw. "0") wird ein Signal übertragen, beispielsweise in Form eines einfachen Trägersignals, im anderen Fall (Wert 'Off', bzw. "1") wird kein Signal übertragen. Der Zustand 'On' ist dabei dominant während der Zustand 'Off' rezessiv ist.

Ein weiteres Beispiel für ein entsprechendes Kommunikationssystem, das diese Unterscheidung von dominanten und rezessiven Bits unterstützt, ist ein (drahtgebundenes oder optisches) System basierend auf einer bitweisen Bus-Arbitrierung, wie sie beispielsweise beim CAN-Bus zum Einsatz kommt. Die Grundidee dabei besteht ebenfalls darin, dass wenn beispielsweise zwei Knoten gleichzeitig ein Signal übertragen wollen und der eine Knoten eine '1' überträgt, wohingegen der zweite Knoten eine '0' sendet, die '0' "gewinnt" (also das dominante Bit), d.h. der Signalpegel, der auf dem Bus gemessen werden kann, entspricht einer logischen '0'. Bei CAN wird dieser Mechanismus insbesondere zur Auflösung von möglichen Kollisionen benutzt. Dabei werden höherpriore Nachrichten (d.h. Nachrichten mit früherem, dominantem Signalpegel) vorrangig übertragen, indem jeder Knoten bei der Übertragung seines CAN-Identifiers bitweise gleichzeitig den Signalpegel auf dem Bus überwacht. Sofern der Knoten selbst ein rezessives Bit überträgt, aber auf dem Bus ein dominantes Bit detektiert wird, bricht der entsprechende Knoten seinen Übertragungsversuch zugunsten der höherprioren Nachricht (mit dem früheren dominanten Bit) ab.

Die Unterscheidung von dominanten und rezessiven Bits erlaubt es, das geteilte Übertragungsmedium als eine Art binären Operator aufzufassen, der die verschiedenen Eingangsbits (=alle gleichzeitig übertragenen Bits) mit Hilfe einer logischen UND-Funktion miteinander verknüpft.

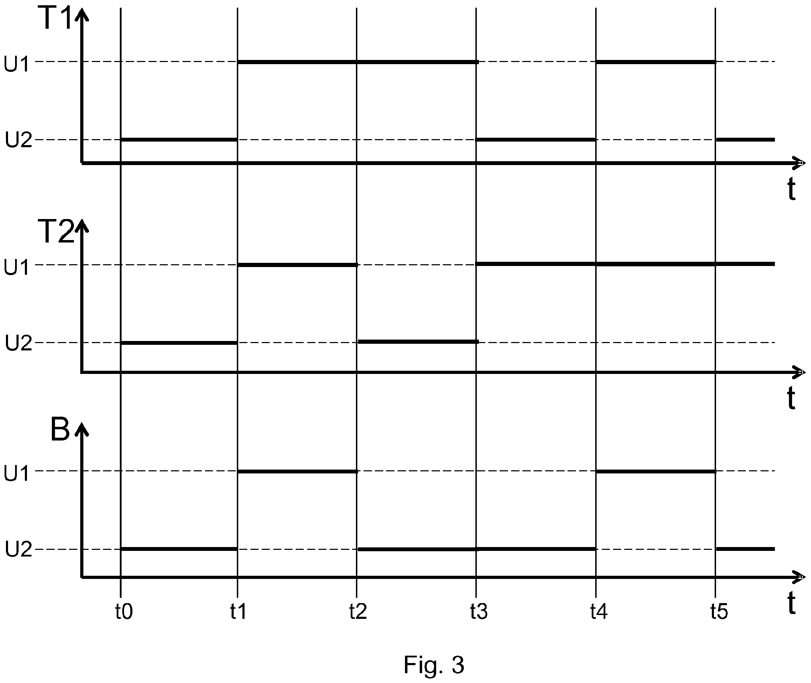

In Fig. 3 ist beispielsweise dargestellt, wie ein Teilnehmer 1 (T1) die Bitfolge 0, 1, 1, 0, 1 zur Sendung zwischen den Zeitpunkten t0 und t5 über den Übertragungskanal bereit hält. Teilnehmer 2 (T2) hält die Bitfolge 0, 1, 0, 1, 1 zur Sendung zwischen Zeitpunkten t0 und t5 über den Übertragungskanal bereit. Mit den oben beschriebenen Eigenschaften des Kommunikationssystems und unter der Annahme, dass es sich in diesem Beispiel bei dem Bitpegel "0" um das dominante Bit handelt, wird auf dem Bus (B) die Bitfolge 0, 1, 0, 0, 1 zu sehen sein. Nur zwischen den Zeitpunkten t1 und t2 sowie zwischen t4 und t5 sehen sowohl Teilnehmer 1 (T1) als auch Teilnehmer 2 (T2) ein rezessives Bit "1" vor, so dass nur hier die logische UND-Verknüpfung in einen Bitpegel von "1" auf dem Bus (B) resultiert.

Unter Ausnutzung dieser Eigenschaften des Übertragungsverfahrens des Kommunikationssystems kann eine Schlüsselgenerierung zwischen zwei Teilnehmern eines entsprechenden Netzwerks nun erfolgen, indem die Teilnehmer eine Überlagerung von Bitfolgen der beiden Teilnehmer auf dem Übertragungsmedium detektieren und aus dieser Information gemeinsam mit Informationen über die selbst gesendete Bitfolge einen gemeinsamen (symmetrischen), geheimen Schlüssel erzeugen.

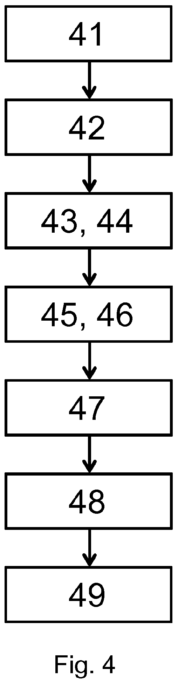

Eine beispielhafte, besonders bevorzugte Realisierung wird im Folgenden anhand von Fig. 4 erläutert.

Der Prozess zur Generierung eines symmetrischen Schlüsselpaars wird in Schritt 41 von einem der in diesem Beispiel zwei beteiligten Knoten (Teilnehmer 1 und Teilnehmer 2) gestartet. Dies kann beispielsweise durch das Versenden einer speziellen Nachricht bzw. eines speziellen Nachrichtenheaders erfolgen.

Sowohl Teilnehmer 1 als auch Teilnehmer 2 generieren in Schritt 42 zunächst lokal (d.h. intern und voneinander unabhängig) eine Bitsequenz. Vorzugsweise ist diese Bitfolge mindestens zweimal, insbesondere mindestens dreimal so lang wie der als Resultat des Verfahrens erwünschte gemeinsame Schlüssel. Die Bitfolge wird vorzugsweise jeweils als zufällige oder pseudozufällige Bitabfolge, beispielsweise mit Hilfe eines geeigneten Zufallszahlengenerators oder Pseudozufallszahlengenerators erzeugt.

*Beispiel für lokale Bitfolgen der Länge 20 Bits:*

- *Erzeugte Bitsequenz von Teilnehmer 1:*

$$S_{T1} = \; 01001101110010110010$$

- *Erzeugte Bitsequenz von Teilnehmer 2:*

$$S_{T2} = \quad 10010001101101001011$$

In einem Schritt 43 übertragen Teilnehmer 1 und Teilnehmer 2 zueinander (weitgehend) synchron ihre jeweils erzeugten Bitsequenzen über das geteilte Übertragungsmedium (unter Verwendung des Übertragungsverfahrens mit dominanten und rezessiven Bits, wie zuvor bereits erläutert). Dabei sind verschiedene Möglichkeiten zur Synchronisierung der entsprechenden Übertragungen denkbar. So könnte beispielsweise entweder Teilnehmer 1 oder Teilnehmer 2 zunächst eine geeignete Synchronisationsnachricht an den jeweils anderen Knoten senden und nach einer bestimmten Zeitdauer im Anschluss an die vollständige Übertragung dieser Nachricht dann die Übertragung der eigentlichen Bitsequenzen starten. Genauso ist es aber auch denkbar, dass von einem der beiden Knoten nur ein geeigneter Nachrichtenheader übertragen wird (z.B. ein CAN-Header bestehend aus Arbitrierungsfeld und Kontrollfeld) und während der zugehörigen Payload-Phase dann beide Knoten gleichzeitig ihre generierten Bitsequenzen (weitgehend) synchron übermitteln. In einer Variante des Verfahrens können die in Schritt 42 generierten Bitsequenzen eines Teilnehmers in Schritt 43 auch auf mehrere Nachrichten verteilt übertragen werden können, beispielsweise wenn dies die (Maximal-)Größen der entsprechenden Nachrichten erforderlich machen. Auch in dieser Variante erfolgt die Übertragung der auf entsprechend viele, entsprechend große Nachrichten verteilten Bitsequenzen des anderen Teilnehmers wiederum (weitgehend) synchron.

Auf dem geteilten Übertragungsmedium überlagern sich die beiden Bitsequenzen dann, wobei aufgrund der zuvor geforderten Eigenschaft des Systems mit der Unterscheidung von dominanten und rezessiven Bits die einzelnen Bits von Teilnehmer 1 und Teilnehmer 2 eine Überlagerung ergeben, im genannten Beispiel de facto UND-verknüpft werden. Damit ergibt sich auf dem Übertragungskanal eine entsprechende Überlagerung, die beispielsweise ein mithörender dritter Teilnehmer detektieren könnte.

*Beispiel einer Überlagerungsbitfolge für die obigen, lokalen Bitfolgen:*

- *Effektive Bitsequenz auf dem Übertragungskanal:*

$$S_{eff} = S_{T1} \text{ AND } S_{T2} = 00000001100000000010$$

Sowohl Teilnehmer 1 als auch Teilnehmer 2 detektieren während der Übertragung ihrer Bitsequenzen des Schritts 43 in einem parallelen Schritt 44 die effektiven (überlagerten) Bitsequenzen $S_{eff}$ auf dem geteilten Übertragungsmedium. Für das Beispiel des CAN-Busses wird dies auch in konventionellen Systemen während der Arbitrierungsphase gewöhnlicherweise ohnehin gemacht.

Für Systeme mit ,On-Off-Keying' (drahtlos, drahtgebunden oder optisch) ist dies entsprechend ebenfalls möglich. Der praktischen Realisierbarkeit kommt hierbei insbesondere zugute, dass bei einem solchen System der Zustand ,On' dominant und der Zustand ,Off' rezessiv ist (wie zuvor bereits erläutert). Folglich weiß ein Knoten auch ohne Messung, dass der effektive Zustand auf dem "Shared Medium" dominant ist sofern der Knoten selbst ein dominantes Bit gesendet hat. Hat ein Knoten hingegen ein rezessives Bit gesendet, kennt er den Zustand auf dem geteilten Übertragungsmedium zunächst nicht ohne Weiteres, allerdings kann er in diesem Fall durch eine geeignete Messung bestimmen, wie dieser aussieht. Da der Knoten selbst in diesem Fall nichts sendet, gibt es nämlich auch keine Probleme mit so genannter Selbstinterferenz, die speziell im Fall von drahtlosen Systemen ansonsten eine aufwändige Echokompensation erforderlich machen würde.

In einem nächsten Schritt 45 übertragen sowohl Teilnehmer 1 als auch Teilnehmer 2 ebenfalls wieder (weitgehend) synchron ihre initialen Bitsequenzen Sn und $S_{T2}$, diesmal allerdings invertiert. Die Synchronisierung der entsprechenden Übertragungen kann dabei wieder genau auf dieselbe Art und Weise realisiert werden, wie oben beschrieben. Auf dem geteilten Kommunikationsmedium werden die beiden Sequenzen dann wieder miteinander UND-verknüpft. Teilnehmer 1 und 2 ermitteln wiederum die effektiven, überlagerten Bitsequenzen $S_{eff}$ auf dem geteilten Übertragungsmedium.

*Beispiel für die obigen Bitfolgen:*

- *Invertierte Bitsequenz von Teilnehmer 1:*

$$S_{T1}{}' = 10110010001101001101$$

- *Invertierte Bitsequenz von Teilnehmer 2:*

$$S_{T2}{}' = 01101110010010110100$$

- *Effektive, überlagerte Bitsequenz auf dem Kanal:*

$$S_{eff}{}' = S_{T1}{}' \; AND \; S_{T2}{}' = 00100010000000000100$$

Sowohl Teilnehmer 1 als auch Teilnehmer 2 ermitteln während der Übertragung ihrer nun invertierten Bitsequenzen dann wieder die effektiven, überlagerten Bitsequenzen auf dem geteilten Übertragungsmedium. Zu diesem Zeitpunkt kennen somit beide Knoten (Teilnehmer 1 und Teilnehmer 2), sowie auch ein möglicher Angreifer (z.B. Teilnehmer 3), der die Kommunikation auf dem geteilten Übertragungsmedium mithört, die effektiven, überlagerten Bitsequenzen $S_{eff}$ und $S_{eff}{}'$. Im Gegensatz zum Angreifer bzw. dritten Teilnehmer kennt aber Teilnehmer 1 noch seine initial erzeugte, lokale Bitsequenz $S_{T1}$ und Teilnehmer 2 seine initial erzeugte, lokale Bitsequenz $S_{T2}$. Teilnehmer 1 wiederum kennt aber nicht die initial erzeugte, lokale Bitsequenz von Teilnehmer 2 und Teilnehmer 2 nicht die initial erzeugte, lokale Bitsequenz von Teilnehmer 1. Die Detektion der Überlagerungsbitfolge erfolgt wiederum während der Übertragung in Schritt 46.

Alternativ zu dieser beispielhaften Ausführungsvariante können Teilnehmer 1 und Teilnehmer 2 ihre invertierte, lokale Bitfolge auch direkt mit bzw. direkt nach ihrer ursprünglichen, lokalen Bitfolge versenden, d.h. Schritte 45 und 46 erfolgen mit den Schritten 43 und 44. Die ursprüngliche und die invertierte Bitfolge können dabei in einer Nachricht, aber auch in separaten Nachrichten als Teil-Bitfolgen übermittelt werden.

In Schritt 47 verknüpfen Teilnehmer 1 und Teilnehmer 2 nun jeweils lokal (also intern) die effektiven, überlagerten Bitfolgen ($S_{eff}$ und $S_{eff}{}'$), insbesondere mit einer logischen ODER-Funktion.

*Beispiel für die obigen Bitfolgen:*

$$S_{ges} = S_{eff} \; OR \; S_{eff}{}' = 00100011100000000110$$

Die einzelnen Bits in der aus der ODER-Verknüpfung resultierenden Bitsequenz ($S_{ges}$) geben nun an, ob die entsprechenden Bits von $S_{T1}$ und $S_{T2}$ identisch oder unterschiedlich sind. Ist das n-te Bit innerhalb von $S_{ges}$ beispielsweise eine ‚0', so bedeutet dies, dass das n-te Bit innerhalb von Sn invers zu dem entsprechenden Bit innerhalb von $S_{T2}$ ist. Gleichermaßen gilt, dass wenn das n-te Bit innerhalb von $S_{ges}$ eine ‚1' ist, die entsprechenden Bits innerhalb von $S_{Alice}$ und $S_{Bob}$ identisch sind.

Teilnehmer 1 und Teilnehmer 2 streichen daraufhin in Schritt 48 basierend auf der aus der ODER-Verknüpfung erhaltenen Bitsequenz $S_{ges}$ in ihren ursprünglichen, initialen Bitsequenzen $S_{T1}$ und $S_{T2}$ alle Bits, die in beiden Sequenzen identisch sind. Dies führt folglich zu entsprechend verkürzten Bitsequenzen.

*Beispiel für die obigen Bitfolgen:*

- *Verkürzte Bitsequenz von Teilnehmer 1:*

$$S_{T1,V} = 01011100101100$$

- *Verkürzte Bitsequenz von Teilnehmer 2:*

$$S_{T2,V} = 10100011010011$$

Die resultierenden, verkürzten Bitsequenzen $S_{T1,V}$ und $S_{T2,V}$ sind nun gerade invers zueinander. Somit kann einer der beiden Teilnehmer durch Inversion seiner verkürzten Bitsequenz exakt diejenige verkürzte Bitsequenz ermitteln, wie sie im anderen Teilnehmer bereits vorliegt.

Die dermaßen gemeinsam vorliegende, verkürzte Bitsequenz wird nun von Teilnehmer 1 und Teilnehmer 2 in Schritt 49 jeweils lokal auf geeignete Art und Weise aufbereitet, um den eigentlich gewünschten Schlüssel der gewünschten Länge N zu generieren. Auch hierbei gibt es wieder eine Vielzahl von Möglichkeiten, wie diese Aufbereitung erfolgen kann. Eine Möglichkeit ist die Selektion von N Bits aus der gemeinsam vorliegenden, verkürzten Bitsequenz, wobei klar definiert sein muss, welche N Bits zu nehmen sind, z.B. indem einfach immer die ersten N Bits der Sequenz selektiert werden. Ebenfalls möglich ist die Berechnung einer Hashfunktion über die gemeinsam vorliegende, verkürzte Bitsequenz, die einen Hashwert der Länge N liefert. Ganz allgemein kann die Aufbereitung mit jeder beliebigen linearen und nichtlinearen Funktion erfolgen, die bei Anwendung auf die gemeinsam vorliegende, verkürzte Bitsequenz eine Bitsequenz der Länge N Bits zurückliefert. Der Mechanismus der Schlüsselerzeugung aus der gemeinsam vorliegenden, verkürzten Bitsequenz liegt vorzugsweise in beiden Teilnehmern 1 und 2 identisch vor und wird entsprechend auf die gleiche Weise durchgeführt.

Im Anschluss an die Schlüsselgenerierung kann ggf. noch verifiziert werden, dass die von Teilnehmer 1 und 2 generierten Schlüssel tatsächlich identisch sind. Dazu könnte beispielsweise eine Checksumme über die generierten Schlüssel berechnet und zwischen Teilnehmer 1 und 2 ausgetauscht werden. Sind beide Checksummen nicht identisch, so ist offensichtlich etwas fehlgeschlagen. In diesem Fall könnte das beschriebene Verfahren zur Schlüsselgenerierung wiederholt werden.

In einer bevorzugten Variante des Verfahrens zur Schlüsselgenerierung können in verschiedenen Durchläufen zunächst auch eine ganze Reihe von resultierenden, bei Teilnehmer 1 und 2 jeweils vorliegenden, verkürzten Bitsequenzen erzeugt werden, die dann zu einer einzigen großen Sequenz kombiniert werden, bevor der eigentliche Schlüssel davon abgeleitet wird. Dies kann ggf. auch adaptiv erfolgen. Sollte nach dem einmaligen Durchlaufen der beschriebenen Prozedur z.B. die Länge der gemeinsamen, verkürzten Bitsequenz beispielsweise kleiner als die gewünschte Schlüssellänge N sein, so könnte man durch einen erneuten Durchlauf z.B. weitere Bits vor der eigentlichen Schlüsselableitung generieren.

Das generierte, symmetrische Schlüsselpaar kann nun schließlich von Teilnehmer 1 und Teilnehmer 2 in Verbindung mit etablierten (symmetrischen) kryptographischen Verfahren, wie z.B. Chiffren zur Datenverschlüsselung, eingesetzt werden.

Ein möglicher Angreifer (z.B. Teilnehmer 3) kann die öffentliche Datenübertragung zwischen Teilnehmer 1 und Teilnehmer 2 abhören und somit wie beschrieben Kenntnis der effektiven, überlagerten Bitfolgen ($S_{eff}$ und $S_{eff}'$) erlangen. Damit weiß der Angreifer dann allerdings nur, welche Bits in den lokal generierten Bitsequenzen von Teilnehmer 1 und 2 identisch sind und welche nicht. Bei den identischen Bits kann der Angreifer darüber hinaus sogar noch feststellen, ob es sich dabei um eine ‚1' oder eine ‚0' handelt. Für eine vollständige Kenntnis der resultierenden, verkürzten Bitfolge (und damit der Grundlage zur Schlüsselgenerierung) fehlen ihm aber die Informationen über die nicht identischen Bits. Um dem Angreifer mögliche Angriffe weiter zu erschweren, wird in einer bevorzugten Variante zusätzlich die in den ursprünglichen, lokal erzeugten Bitfolgen der Teilnehmer 1 und 2 identischen Bitwerte gelöscht. Damit verfügt Teilnehmer 3 nur über Informationen, die für die Schlüsselgenerierung gar nicht verwendet werden. Er weiß zwar, dass entsprechend verkürzte Bitfolgen aus den zwischen den lokalen Bitfolgen der Teilnehmer 1 und Teilnehmer 2 unterschiedlichen Bits hervorgehen. Er weiß aber nicht, welche Bits Teilnehmer 1 und Teilnehmer 2 jeweils gesendet haben.

Teilnehmer 1 und Teilnehmer 2 haben zusätzlich zu der Information über die überlagerte Gesamt-Bitfolge noch die Information über die jeweils von ihnen gesendete, lokal generierte Bitfolge. Aus diesem Informationsvorsprung gegenüber einem lediglich der öffentlichen Datenübertragung folgenden Teilnehmer 3 rührt die Tatsache, dass die in Teilnehmer 1 und 2 generierten Schlüssel trotz der öffentlichen Datenübertragung als Grundlage geheim bleiben.

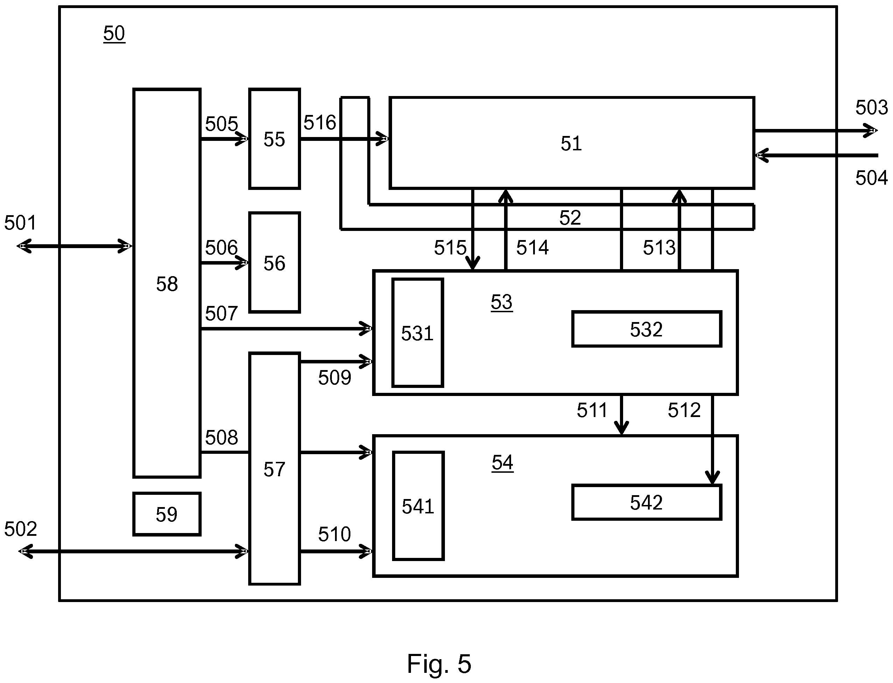

In Fig. 5 ist ein Kommunikationsmodul oder Protokollmodul gezeigt. Dabei handelt es sich in dieser beispielhaften Ausgestaltung um ein sogenanntes CAN Protocol Controller Modul oder auch kurz CAN-Modul. Für ein CAN-Bussystem kann hierzu z.B. ein CAN-Kommunikationsmodul auf Basis eines CAN-Controller-IP-Moduls der Robert Bosch GmbH wie M_CAN, C_CAN oder D_CAN oder für ein LIN-Bussystem ein LIN-Kommunikationsmoduls auf Basis eines LIN-Kommunikationscontroller-IP-Moduls der Robert Bosch GmbH wie C_LIN eingesetzt werden. In Fig. 5 ist ein CAN-Modul 50 auf Basis der M_CAN-IP gezeigt.

Ein CAN-Core 51 führt die Kommunikation entsprechend einer bestimmten CAN-Protokoll-Version aus, z.B. Version 2.0 A, B und ISO 11898-1 und kann ebenfalls CAN FD unterstützen. Mit den Verbindungen 503 bzw. 504 sind die logischen CAN-Sende- bzw. CAN-Empfangsverbindungen bezeichnet. Der Synchronisationsblock 52 synchronisiert Signale zwischen den zwei vorhandenen Uhrendomänen. Der Modul-interne Taktgeber ist mit 59 bezeichnet. Über den Konfigurations- und Steuerungsblock 55 können CAN-Core-bezogene Konfigurations- und Steuerungsbits gesetzt werden. Der Block 56 dient der Interrupt-Steuerung und der Erzeugung von Empfangs- und Sende-Zeitstempeln. Die Schnittstelle 58 dient als generische Slave-Schnittstelle der möglichen Verbindung des CAN-Moduls mit vielen verschiedenen CPU-Typen über die Verbindung 501. Die Schnittstelle 57 dient als generische Master-Schnittstelle dem Zugriff auf einen Nachrichtenspeicher, insbesondere einem RAM, über die Verbindung 502. Der Block 53 entspricht einem Tx Handler oder Sende-Manager, welcher die Nachrichtenübertragung von einem externen Nachrichtenspeicher zum CAN-Core steuert. Dabei können bis zu 32 Transmit-Buffer für die Übertragung konfiguriert werden. Sende-Zeitstempel werden mit entsprechenden Nachrichten-IDs abgespeichert. Die Blöcke 531 bzw. 532 im Sende-Manager entsprechen einem Steuerungs- und Konfigurationsblock bzw. einem Sende-Priorisierungsblock. Der Rx Handler bzw. Empfangs-Manager 54 steuert die Übertragung empfangener Nachrichten vom CAN Core zu externem Nachrichtenspeicher. Dabei wird die Speicherung von bis zu 128 Nachrichten unterstützt. Ein Empfangszeitstempel wird mit jeder Nachricht abgespeichert.

Das Kommunikationsmodul umfasst also einen zentralen Schaltungsteil (hier CAN Core 51) zur protokollgemäßen Steuerung einer Kommunikation zwischen einer Host-CPU und einem externen Nachrichtenspeicher sowie zum protokollgemäßen Empfang und Senden von Nachrichten über das Kommunikationssystem (hier über die Verbindungen 503 und 504). Über eine Schnittstelle (hier Master-Schnittstelle 57 und die Verbindung 502) ist das Modul mit dem externen Nachrichtenspeicher verbunden. Über eine weitere Schnittstelle (hier Slave-Schnittstelle 58 und die Verbindung 501) ist das Modul mit der Host-CPU verbunden. Er kann als Standalone-Einheit, als Teil eines ASIC oder mit einem FPGA realisiert werden.

Die Verbindung zur physikalischen Schicht kann durch zusätzliche Transceiver-Hardware unterstützt werden. Mehrere Kommunikationsmodule können sich einen externen Nachrichtenspeicher teilen.

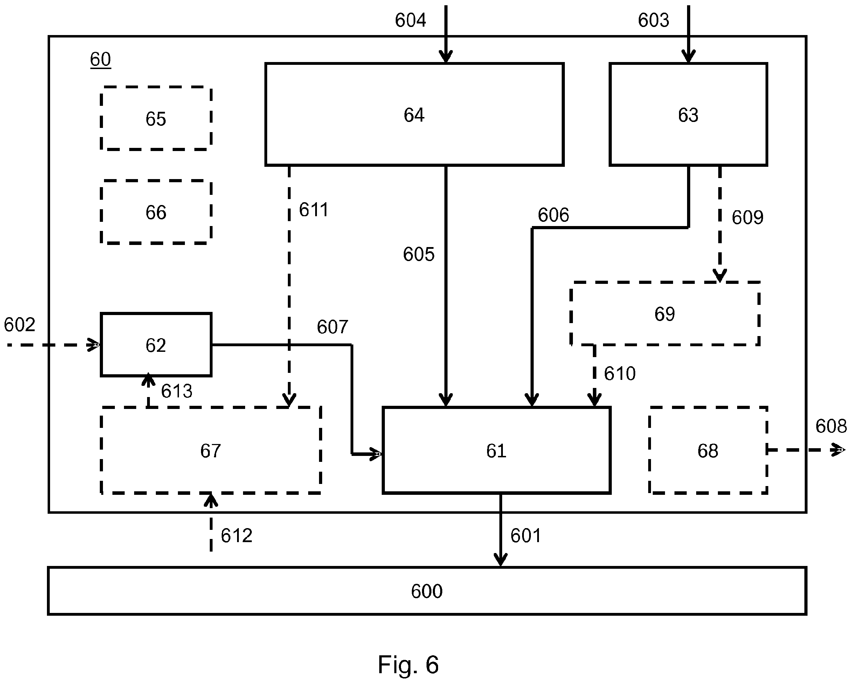

In Fig. 6 ist ein Modul 60 gezeigt, welches in einer Schaltungsanordnung eines Teilnehmers an einem Netzwerk diesen Teilnehmer bei der Generierung eines gemeinsamen Geheimnisses mit anderen Netzwerkteilnehmern unterstützen kann (im Folgenden auch: "weiteres Modul"). Das Modul 60 kann dabei Daten bzw. Nachrichten auf den Bus 600 geben, welcher in einer bevorzugten Ausgestaltung als CAN-Bus realisiert ist.

Dabei verfügt das Modul 60 über einen Block 64 zur Konfiguration des Moduls über eine Schnittstelle 604, insbesondere für Protokoll-spezifische Konfigurationen wie Baudrate, IDs, etc. Des Weiteren umfasst es einen Block 63 (z.B. ein Register), in welchem eine Zeichenkette, insbesondere eine Zufallszahl oder Pseudozufallszahl abgelegt werden kann, insbesondere empfangen über eine Schnittstelle 603. Block 62 bezeichnet ein Triggermodul, welches in einer bevorzugten Ausführungsform über die Schnittstelle 602 zu einem Triggersignal veranlasst werden kann. Alternativ kann das Triggermodul ein Triggersignal auch selbständig veranlassen. Das Modul verfügt weiterhin über Sendemittel wie die als Block 61 gezeigten Sende-Pufferspeicher (Tx-Buffer), die über eine Schnittstelle 601 Nachrichten bzw. Daten auf den Bus 600 geben können.

Die hauptsächliche Funktionsweise des Moduls ist dabei, dass in Abhängigkeit einer Konfiguration (angedeutet durch die Verbindung 605 zwischen Konfigurationsblock 64 und Sendemittel 61) eine Zufallszahl oder Pseudozufallszahl aus Block 63 über Verbindung 606 an die Sendemittel 61 gegeben wird und über die Schnittstelle 601 an den CAN-Bus 600 ausgegeben wird. Getriggert wird dieser Vorgang (entweder bereits die Übertragung der Zahl von Block 63 an Block 61 oder zumindest die Übertragung der Zahl von Block 61 an den Bus 600) insbesondere durch ein Auslösesignal durch das Triggermodul 62 über die Verbindung 607 an die Sendemittel 61.

In bevorzugten Ausgestaltungen des Moduls 60 kann dieses auch über einen Speicher 65 (insbesondere einen RAM) verfügen, in welchem eine oder mehrere Zufallszahlen oder Pseudozufallszahlen gespeichert sind, welche abhängig von dem Triggersignal über die Sendemittel 61 ausgegeben werden. Diese Zufallszahlen können auch durch einen optionalen Zufallszahlengenerator (insbesondere einen TRNG) im Modul 60 erzeugt werden.

Weiterhin kann das Modul 60 in einer bevorzugten Ausgestaltung auch Empfangsmittel 67, insbesondere Empfangs-Pufferspeicher 67 aufweisen, welche über eine Schnittstelle 612 Nachrichten bzw. Daten vom Bus 600 empfangen können. Über eine Schnittstelle 613 zwischen Empfangsmitteln 67 und Triggerblock 62 kann in dieser Ausgestaltung auch in Abhängigkeit von empfangenen Daten ein Triggersignal zum Senden von Daten ausgelöst werden. Z.B. kann erkannt werden, dass von einem anderen Netzwerkteilnehmer eine Zufallszahlenfolge zur Geheimnisgenerierung auf den Bus gelegt wird (z.B. über eine entsprechende Nachrichten-ID) und daraufhin der Trigger durch das Triggerblock 62 erfolgen, dass auch dieser Teilnehmer über das Modul 60 eine Zufallszahlenfolge (weitgehend) synchron zu Übertragung der Zufallszahlenfolge durch den anderen Netzwerkteilnehmers auf den Bus gibt.

In einem optionalen Block 68 können Fehlerzustände des Moduls 60 abgelegt werden und diese über eine Schnittstelle 608 auch nach extern gemeldet bzw. von extern abgerufen werden.

In einer weiteren bevorzugten Ausgestaltung kann das Modul 60 auch über einen Schaltungsteil 69 zur dynamischen Botschaftsgenerierung verfügen. Dieser kann über eine Schnittstelle 609 eine Zufallszahl oder Pseudozufallszahl empfangen und in Abhängigkeit dieser eine Botschaft generieren und über die Verbindung 610 an die Sendemittel 61 weitergeben. Die Botschaft ist zur weitgehend synchronen Übertragung von Zufallszahlen mit einem weiteren Netzwerkteilnehmer vorgesehen, um wie oben beschrieben ein gemeinsames Geheimnis zwischen den Netzwerkteilnehmern zu generieren.

In einer Schaltungsanordnung (insbesondere einem Mikrocontroller), welcher die oben beschrieben Verfahren zur Geheimnis- bzw. Schlüsselgenerierung zwischen Netzwerkteilnehmern unterstützen soll, sind neben weiteren Komponenten und Schnittstellen vorteilhafterweise mindestens ein Kommunikationsmodul wie zu Fig. 5 beschrieben sowie mindestens ein weiteres Modul wie zu Fig. 6 beschrieben enthalten.

Die beschriebenen Verfahren zur Schlüsselgenerierung beinhalten viele Einzelschritte, bei denen Fehler auftreten können. Da es sich vorzugsweise um Verfahren zur Generierung eines geheimen, kryptographischen Schüssels handelt, sollten diese besonders abgesichert sein, um gegen Angriffe und Manipulationen gerüstet zu sein. Dazu sollten die beteiligten Komponenten der Netzwerkteilnehmer Fehler erkennen und geeignet auf diese regieren können.

Versenden zwei Netzwerkteilnehmer synchron Wertfolgen auf dem Übertragungskanal, so können sie erwarten, dass pro gesendeter Wertfolge bzw. pro entsprechender Nachricht eine bestimmte Mindest-Anzahl von Bits eines Geheimnisses generiert werden. Wird diese nicht erreicht, so kann das an einem Fehler liegen (z.B. daran, dass einer der beiden Teilnehmer keine Wertfolge gesendet hat oder dass mehr als zwei Teilnehmer eine Teilnehmerfolge gesendet haben) oder an dem unwahrscheinlichen Fall, dass die den beiden Wertfolgen der Netzwerkteilnehmer zugrunde liegenden Zufallszahlen zu stark korreliert sind. Da die letzte Ursache bei ausreichend langer Wertfolge unwahrscheinlich und selten ist, wird auf einen Fehler erkannt, wenn weniger als die erwartete Anzahl an Bits anhand der Wertfolgen-Überlagerung generiert werden kann. Auf einen solchen Fehler kann direkt eine Fehlerreaktion erfolgen oder nur für den Fall, dass die Bit-Anzahl mehrfach (für eine vorbestimmte Anzahl an Malen) unterschritten wird.

Ähnliche Fehlerbilder können detektiert werden, wenn überprüft wird, ob nach einer vorbestimmten Anzahl erfolgreich und synchron versendeter Wertfolgen oder entsprechender Nachrichten bereits ein Schlüssel einer bestimmten Länge generiert werden konnte oder ob dies nach einer vorbestimmten Zeitdauer der Fall ist.

Es kann auch der Fall auftreten, dass ein Netzwerkteilnehmer bereits Wertfolgen versendet, der andere Netzwerkteilnehmer aber zunächst nicht snychron dazu ebenfalls Wertfolgen überträgt. Solange dieser nach einer bestimmten Verzögerungszeit oder ab einer bestimmten Wertfolge aber mit einer synchronen Übertragung einsetzt, kann der Vorgang folgenlos bleiben (von der nutzlosen Übertragung der Wertfolgen bis zur Synchronisierung abgesehen). Ansonsten kann ebenfalls ein Fehler erkannt werden.

Als Reaktion kommt z.B. eine Benachrichtigung anderer Schaltungsteile des Netzwerkteilnehmers in Frage. Zum Beispiel kann eine Benachrichtigung eines Hardware-Sicherheitsmoduls oder einer Recheneinheit CPU des Netzwerkteilnehmers (insbesondere eines Mikrokontrollers des Netzwerkteilnehmers) erfolgen. Der Netzwerkteilnehmer kann wiederum (insbesondere über höhere Protokollschichen) weitere Netzwerkteilnehmer benachrichtigen bzw. informieren oder zu bestimmten Aktionen auffordern, um eine Wiederaufnahme oder Weiterführung der Schlüsselgenerierung zu erreichen.

Als alternative oder zusätzliche Fehlerreaktion kann der Netzwerkteilnehmer es bis auf Weiteres unterlassen, Wertefolgen zur Geheimnisgenerierung zu versenden.

Die entsprechenden Netzwerkteilnehmer können nun alternativ unverschlüsselt weiter kommunizieren, ihre Kommunikation mit vorkonfigurierten Schlüsseln verschlüsseln, einen bereits früher generierten Schlüssel für die Verschlüsselung verwenden oder einen neuen Schlüssel verwenden, obwohl seine Länge kürzer als die vorbestimmte Anzahl an Bits ist.

Fehlermaßnahmen können optionaler Weise auch hier in bevorzugten Ausgestaltungen erst vorgenommen werden, wenn eine vorbestimmte Anzahl an Neuversuchen zur Schlüsselgenerierung erreicht oder wenn eine vorbestimmte Zeit (z.B. nach Start der Schlüsselgenerierung) verstrichen ist. Eine Zeit kann dabei auch über eine bestimmte Anzahl verstrichener Ereignisse definiert sein.

Wie beschrieben werden die in den jeweiligen Netzwerkteilnehmer generierten Schlüssel vorzugsweise abgeglichen. Dazu senden sich die Netzwerkteilnehmer verschlüsselte Botschaften oder führen z.B. den Abgleich über eine Signatur oder einen Hashwert durch, die mithilfe Schlüssels berechnet wurden. Liegt nach einer bestimmten Anzahl von Abgleichversuchen bzw. entsprechender Botschaften oder nach einer bestimmten Zeit (z.B. nach Start der Schlüsselgenerierung) kein erfolgreicher Schlüsselabgleich vor, dann kann ebenfalls auf einen Fehler erkannt werden. Die Fehlerreaktionen können wieder wie oben beschrieben erfolgen.

Auch bei der Generierung der Schlüssel aus den ermittelten Geheimnissen können Fehler auftreten. Fehler in der Berechnung können dabei vorzugsweise bereits durch den Netzwerkteilnehmer selbst detektiert werden. Fehlerhafte Schlüssel können beim Schlüsselabgleich (bzw. wie oben beschrieben durch nicht erfolgreichen Schlüsselabgleich) detektiert werden.

Weitere Fehler können auftreten bei der Generierung eines Gruppenschlüssels (insbesondere über eine höhere Protokollschicht) zwischen mehreren Netzwerkteilnehmern auf Basis der ermittelten Schlüssel. Auch hier kann ähnlich den oben beschriebenen Überwachungen eine verstrichene Zeit oder eine erfolglose Anzahl an Versuchen zur Generierung des Gruppenschlüssels einen Fehler anzeigen. Als Fehlerursache kommen beispielsweise nicht oder zu spät reagierende Netzwerkteilnehmer, überlastete oder gestörte Übertragungskanäle oder durch Angriffe auf das System eingeschränkte Funktionalität in Frage. Die Netzwerkteilnehmer können bei Vorliegen eines solchen Fehlers erst einmal unverschlüsselt weiter kommunizieren oder mit einem zuvor etablierten Schlüssel die weitere Kommunikation absichern.

Ein Netzwerkteilnehmer verwendet vorzugsweise Zufallszahlen oder Pseudozufallszahlen zur Generierung der Wertfolgen, die synchron auf dem Übertragungskanal übertragen werden. Ein weiteres Fehlerbild im Rahmen der Verfahren zur Schlüsselgenerierung kann dabei darin bestehen, dass keine ausreichende Anzahl an Zufallszahlen zur Verfügung steht, dass eine generierende Einheit Zufallszahlen nicht rechtzeitig oder häufig genug bereit stellt oder dass bereit gestellte Zufallszahlen nicht die erforderliche Güte oder Länge haben. Als Reaktion hierauf kann der Netzwerkteilnehmer ersatzweise Zufallszahlen geringerer Güte verwenden, die er z.B. selbst generieren kann oder vorrätig halten kann. Zusätzlich oder alternativ kann eine Benachrichtigung höherer Einheiten, z.B. eines Hardware-Sicherheitsmoduls oder einer Recheneinheit des Netzwerkteilnehmers, erfolgen. Diese können dann auch auf höheren Protokollebenen die weitere Fehlerbehandlung übernehmen.

In einer besonders bevorzugten Ausgestaltung der beschriebenen Verfahren werden wichtige Schritte der Verfahren durch eine Schaltungsanordnung, z.B. durch einen Mikrocontroller, des Netzwerkteilnehmers übernommen, die ein Kommunikationsmodul wie zu Fig. 5 beschrieben und ein weiteres Modul wie zu Fig. 6 beschrieben umfasst. In dieser Ausgestaltung kann insbesondere das Kommunikationsmodul das weitere Modul auf Fehler überwachen. Da beide vorzugsweise am gleichen Kommunikationskanal, insbesondere am gleichen Bus, angeschlossen sind, sieht das Kommunikationsmodul alle Botschaften, die das weitere Modul sendet und empfängt. Das Kommunikationsmodul kann dann (eventuell mit Hilfe einer Recheneinheit der Schaltungsanordnung) die Zahl bestimmter Botschaften zählen. Die Botschaften werden durch ihre ID identifiziert.

Erkennen das Kommunikationsmodul oder die Recheneinheit, dass bestimmte Botschaften zu oft gesendet werden oder dass überhaupt zu viele Botschaften gesendet werden, so kann das weitere Modul von ihnen vom Kommunikationskanal getrennt werden, damit es die restliche Kommunikation nicht stört. Das kann beispielsweise durch eine Deaktivierung des weiteren Moduls über eine Konfiguration (z.B. Setzen eines Konfigurationsbits) oder durch Unterbrechen des Sendesignals des weiteren Moduls mit Hilfe einer Hardwareschaltung (z.B. eines Multiplexers) geschehen.

Alternativ oder zusätzlich kann das weitere Modul auch das Kommunikationsmodul auf die gleichen Fehler hin überwachen und die gleichen Fehlerreaktionen durch Trennung des Kommunikationsmoduls vom Übertragungskanal veranlassen.

Das weitere Modul wird in der Regel nur dann benötigt, wenn Botschaften für die Schlüssel-Generierung ausgetauscht werden sollen. Um das Risiko für das System durch ein Fehlverhalten des weiteren Moduls zu minimieren, kann dieses immer dann ausgeschaltet werden, wenn es nicht benötigt wird. Zudem wird vorteilhafter Weise das weitere Modul immer nur dann eingeschaltet, wenn sich das Gesamtsystem (z.B. PKW) in einem unkritischen Betriebszustand befindet (z.B. Motor aus und Geschwindigkeit gleich Null oder unterhalb einer vorbestimmten Schwelle).

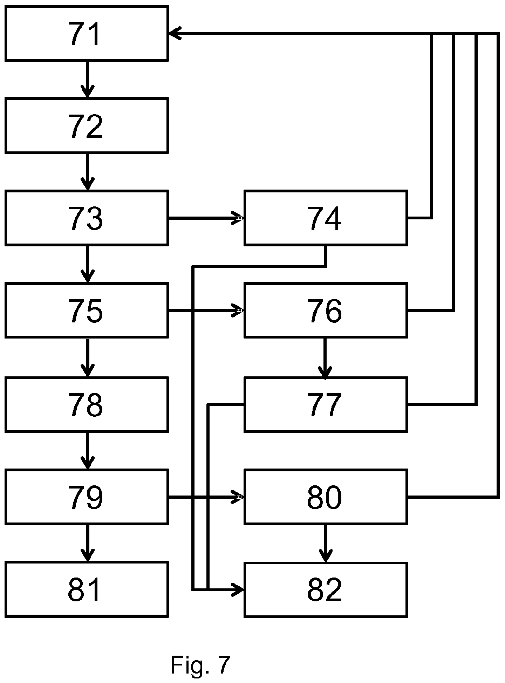

Ein beispielhaftes Verfahren zur Fehlerüberwachung und zum Abbruch der Schlüsselgenerierung im Fehlerfall ist in Fig. 7 gezeigt.

Das Verfahren startet mit Schritt 71. In Schritt 72 sendet ein Netzwerkteilnehmer eine Wertfolge zur synchronen Übertragung mit einer Wertfolge eines weiteren Netzwerkteilnehmers und triggert hierzu gegebenenfalls den weiteren Netzwerkteilnehmer.

In Schritt 73 wird überprüft, ob durch die synchrone Übertragung der Wertfolgen eine vorbestimmte Zahl an Werten bzw. Bits eines gemeinsamen Geheimnisses generiert wurde. Falls nein, wird in einem Schritt 74 überprüft, ob eine vorbestimmte Anzahl an Neuversuchen bereits ausgeschöpft ist. Falls nein, verzweigt das Verfahren zurück zu Schritt 71. Falls die Anzahl der Neuversuche ausgeschöpft ist, verzweigt Schritt 74 zu Schritt 82, dem Abbruch des Verfahrens. Falls in Schritt 73 die mindestens erwartete, vorbestimmte Zahl an Werten bzw. Bits des gemeinsamen Geheimnisses festgestellt wird, verzweigt das Verfahren zu Schritt 75.

In Schritt 75 wird überprüft, ob der zu generierende Schlüssel bereits die erwartete, vorbestimmte Länge erreicht hat. Falls nicht, wird in Schritt 76 überprüft, ob bereits eine vorbestimmte, maximale Anzahl an synchron versendeten Wertfolgen gesendet wurde oder ob eine vorbestimmte, maximale Zeit verstrichen ist. Falls nein, verzweigt das Verfahren wieder zu Schritt 71. Falls die maximale Anzahl oder Zeit erreicht sind, wird zu Schritt 77 verzweigt, wo überprüft wird, ob eine vorbestimmte, maximale Anzahl an Versuchen zur Schlüsselgenerierung bereits erfolgt ist. Falls ja, wird zu Schritt 82 verzweigt und das Verfahren abgebrochen. Falls nein, wird zu Schritt 71 verzweigt. Wird in Schritt 75 dagegen festgestellt, dass die erwartete minimale Schlüssellänge erreicht ist, wird zu Schritt 78 verzweigt.

In Schritt 78 wird der Schlüssel überprüft, insbesondere durch geeigneten Abgleich zwischen den Netzwerkteilnehmern. In Schritt 79 wird ermittelt, ob die Schlüsselüberprüfung erfolgreich verlaufen ist. Falls ja, wird das Verfahren mit Schritt 81 erfolgreich abgeschlossen. Falls nein, wird in Schritt 80 überprüft, ob eine vorbestimmte, maximale Anzahl an Überprüfungsversuchen bereits ausgeschöpft oder ob eine vorbestimmte Zeit für die Schlüsselüberprüfung bereits verstrichen ist. Falls ja, erfolgt der Abbruch in Schritt 82. Falls nein, verzweigt das Verfahren zu Schritt 71. Das heißt das Verfahren wird von vorne gestartet. Ereigniszähler können dabei zurückgesetzt werden.

**Patentansprüche**

1. Verfahren zur Generierung eines Schlüssels in einer ersten Schaltungsanordnung (21), insbesondere in einem Mikrocontroller, wobei die erste Schaltungsanordnung eine Übertragung mindestens einer erste Wertfolge auf einem Übertragungskanal (30) zumindest weitgehend synchron zu einer Übertragung mindestens einer zweiten Wertfolge durch eine zweite Schaltungsanordnung (22) veranlasst und wobei die erste Schaltungsanordnung (21) ein Geheimnis für die Generierung des Schlüssels auf Basis der mindestens einen ersten Wertfolge und auf Basis der Überlagerung der mindestens einen ersten Wertfolge und der mindestens einen zweiten Wertfolge auf dem Übertragungskanal (30) ermittelt, wobei die erste Schaltungsanordnung (21) auf Fehler überwacht wird, **dadurch gekennzeichnet, dass**

   - das ermittelte Geheimnis eine dritte Wertfolge darstellt und ein Fehler erkannt wird, wenn die Länge der dritten Wertfolge eine vorbestimmte Länge unterschreitet,
   - ein Fehler erkannt wird, wenn nach einer vorbestimmten Zeit nach Start der Schlüsselgenerierung oder zu einer vorbestimmten absoluten Zeit oder nach einer vorbestimmten Anzahl übertragener erster Wertfolgen noch kein Schlüssel einer vorbestimmten Länge generiert ist und
   - ein Fehler erkannt wird, wenn nach einer vorbestimmten Zeit nach Start der Schlüsselgenerierung oder nach einer vorbestimmten Zeit nach Beendigung der Schlüsselgenerierung oder zu einer vorbestimmten absoluten Zeit oder nach einer vorbestimmten Anzahl an Versuchen noch kein erfolgreicher Abgleich des generierten Schlüssels zwischen der ersten Schaltungsanordnung (21) und der zweiten Schaltungsanordnung (22) erfolgt ist.

2. Verfahren nach Anspruch 1, **dadurch gekennzeichnet, dass** in der ersten Schaltungsanordnung (21) Funktionen zur Schlüsselgenerierung, insbesondere bei der Übertragung der ersten Wertfolge oder bei der Ermittlung des Geheimnisses oder bei der Generierung des Schlüssels, überwacht werden.

3. Verfahren nach einem der vorangegangenen Ansprüche, **dadurch gekennzeichnet, dass** für den Fall, dass das ermittelte Geheimnis eine dritte Wertfolge darstellt und ein Fehler erkannt wird, wenn die Länge der dritten Wertfolge eine vorbestimmte Länge unterschreitet, eine Fehlerreaktion erst erfolgt, wenn die Unterschreitung der bestimmten Länge durch die dritte Wertfolge für eine vorbestimmte Anzahl an Malen auftritt.

4. Verfahren nach einem der vorangegangenen Ansprüche, **dadurch gekennzeichnet, dass** im Falle des erkannten Fehlers, dass noch kein Schlüssel der vorbestimmten Länge generiert wurde, ein Neuversuch zur Schlüsselgenerierung erfolgt und dass eine entsprechende Fehlerreaktion erst nach einer vorbestimmten Anzahl gescheiterter Neuversuche erfolgt.

5. Verfahren nach einem der vorangegangenen Ansprüche, **dadurch gekennzeichnet, dass** ein Fehler erkannt wird, wenn es bei der Generierung des Schlüssels zu einem Berechnungsfehler kommt.

6. Verfahren nach einem der vorangegangenen Ansprüche, **dadurch gekennzeichnet, dass** die erste Wertfolge auf einer Zufallszahl basiert und dass ein Fehler erkannt wird, falls eine Anzahl dafür zur Verfügung stehender Zufallszahlen oder eine Güte einer oder mehrerer dafür zur Verfügung stehenden Zufallszahlen kleiner als ein vorbestimmter Wert ist.

7. Verfahren nach Anspruch 6, **dadurch gekennzeichnet, dass** bei einem erkannten Fehler aufgrund einer nicht ausreichenden Güte einer Zufallszahl ersatzweise eine Zufallszahl reduzierter Güte herangezogen wird.

8. Verfahren nach einem der vorangegangenen Ansprüche, **dadurch gekennzeichnet, dass** bei einem erkannten Fehler als Fehlerreaktion eine Beendigung der Übertragung erster Wertfolgen erfolgt.

9. Verfahren nach einem der vorangegangenen Ansprüche, **dadurch gekennzeichnet, dass** bei einem erkannten Fehler als Fehlerreaktion eine Benachrichtigung an ein Sicherheitsmodul oder an eine Recheneinheit der ersten Schaltungsanordnung (21) erfolgt.

10. Verfahren nach einem der vorangegangenen Ansprüche, **dadurch gekennzeichnet, dass** bei einem erkannten Fehler keine Schlüsselgenerierung erfolgt und die weitere Kommunikation der ersten Schaltungsanordnung (21) unabgesichert oder mit einem vorherigen Schlüssel abgesichert erfolgt.

**11.** Verfahren nach einem der vorangegangenen Ansprüche, **dadurch gekennzeichnet, dass** bei einem erkannten Fehler die Generierung des Schlüssels bei einer Schlüssellänge unterhalb der vorbestimmten Schlüssellänge abgebrochen wird und die weitere Kommunikation der ersten Schaltungsanordnung mit diesem unvollständigen Schlüssel abgesichert wird.

**12.** Verfahren nach einem der vorangegangenen Ansprüche, **dadurch gekennzeichnet, dass** bei einem erkannten Fehler als Fehlerreaktion eine Benachrichtigung der ersten Schaltungsanordnung (21) an mindestens die zweite Schaltungsanordnung (22) erfolgt, insbesondere als Fehlerbenachrichtigung oder zur Fehleraufklärung.

**13.** Verfahren nach einem der vorangegangenen Ansprüche, **dadurch gekennzeichnet, dass** die erste Schaltungsanordnung (21) und die zweite Schaltungsanordnung (22) mit einer dritten Schaltungsanordnung (23) kommunizieren, um auf Basis generierter Schlüssel einen Gruppenschlüssel zu etablieren, und dass ein Fehler erkannt wird, wenn nach einer vorbestimmten Zeit nach Start der Schlüsselgenerierung oder nach einer vorbestimmten Zeit nach Beendigung der Schlüsselgenerierung oder zu einer vorbestimmten absoluten Zeit oder nach einer vorbestimmten Anzahl an Versuchen noch kein Gruppenschlüssel erfolgreich etabliert wurde.

**14.** Verfahren nach einem der vorangegangenen Ansprüche, **dadurch gekennzeichnet, dass** die erste Schaltungsanordnung (21) mindestens ein Kommunikationsmodul (50) zur Kommunikation über den Übertragungskanal (30) aufweist sowie mindestens ein weiteres Modul (60) für die synchrone Übertragung der ersten Wertfolge aufweist und dass das Kommunikationsmodul (50) das weitere Modul (60) überwacht.

**15.** Verfahren nach Anspruch 14, **dadurch gekennzeichnet, dass** durch das Kommunikationsmodul (50) ein Fehler erkannt wird, wenn das weitere Modul (60) zu oft sendet oder bestimmte Botschaften zu oft sendet.

**16.** Verfahren nach einem der Ansprüche 14 oder 15, **dadurch gekennzeichnet, dass** das Kommunikationsmodul (50) im Fall eines erkannten Fehlers eine Trennung des weiteren Moduls (60) vom Übertragungskanal (30) veranlasst, insbesondere durch Deaktivierung des weiteren Moduls (60) über Konfiguration oder durch Unterbrechen eines Sendesignals des weiteren Moduls (60) über eine Hardwareschaltung.

**17.** Verfahren nach einem der vorangegangenen Ansprüche, **dadurch gekennzeichnet, dass** die erste Schaltungsanordnung (21) mindestens ein Kommunikationsmodul (50) zur Kommunikation über den Übertragungskanal (30) aufweist sowie mindestens ein weiteres Modul (60) für die synchrone Übertragung der ersten Wertfolge aufweist und dass das weitere Modul (60) das Kommunikationsmodul (50) überwacht.

**18.** Verfahren nach Anspruch 17, **dadurch gekennzeichnet, dass** durch das weitere Modul (60) ein Fehler erkannt wird, wenn das Kommunikationsmodul (50) zu oft sendet oder bestimmte Botschaften zu oft sendet.

**19.** Verfahren nach einem der Ansprüche 17 oder 18, **dadurch gekennzeichnet, dass** das weitere Modul (60) im Fall eines erkannten Fehlers eine Trennung des Kommunikationsmoduls (50) vom Übertragungskanal (30) veranlasst, insbesondere durch Deaktivierung des Kommunikationsmoduls (50) über Konfiguration oder durch Unterbrechen eines Sendesignals des Kommunikationsmoduls (50) über eine Hardwareschaltung.

**20.** Verfahren nach einem der vorangegangenen Ansprüche, **dadurch gekennzeichnet, dass** der Übertragungskanal (30) Teil eines CAN-, TTCAN-, CAN-FD-, LIN oder I2C- Bussystems ist, dass die erste Wertfolge und die zweite Wertfolge aus ersten und zweiten Werten aufgebaut sind und dass der erste Wert ein rezessiver Buspegel ist und dass der zweite Wert ein dominanter Buspegel ist.

**21.** Computerprogramm, welches, wenn auf einen Computer geladen und ausgeführt, dazu eingerichtet ist, die Schritte eines Verfahrens nach einem der Ansprüche 1 bis 20 durchzuführen.

**22.** Schaltungsanordnung, insbesondere Mikrocontroller, welche dazu eingerichtet ist, die Schritte eines Verfahrens nach einem der Ansprüche 1 bis 20 durchzuführen.

**Claims**

**1.** Method for generating a key in a first circuit arrangement (21), in particular in a microcontroller, wherein the first circuit arrangement prompts transmission of at least one first value sequence on a transmission channel (30) at least substantially synchronously to transmission of at least one second value sequence by a second circuit arrangement (22) and wherein the first circuit arrangement (21) ascertains a secret for the generation of the key based on the at least one first value sequence and based on the superposition of the at least one first value sequence and the at least one second value sequence on the transmission channel (30), wherein the first circuit arrangement (21) is monitored for errors, **characterized in that**

- the ascertained secret constitutes a third value sequence and an error is identified when the length of the third value sequence falls below a predetermined length,
- an error is identified when a key of a predetermined length has still not been generated after a predetermined time after the start of the key generation or at a predetermined absolute time or after a predetermined number of transmitted first value sequences and
- an error is identified when successful alignment of the generated key between the first circuit arrangement (21) and the second circuit arrangement (22) has still not taken place after a predetermined time after the start of the key generation or after a predetermined time after the end of the key generation or at a predetermined absolute time or after a predetermined number of attempts.

2. Method according to Claim 1, **characterized in that** functions for key generation are monitored in the first circuit arrangement (21), in particular in the transmission of the first value sequence or in the ascertainment of the secret or in the generation of the key.

3. Method according to either of the preceding claims, **characterized in that**, for the case that the ascertained secret constitutes a third value sequence and an error is identified when the length of the third value sequence falls below a predetermined length, an error reaction only takes place when the third value sequence falls below the determined length for a predetermined number of times.

4. Method according to one of the preceding claims, **characterized in that**, in the case of the identified error that a key of predetermined length has not yet been generated, a reattempt for key generation takes place and **in that** a corresponding error reaction takes place only after a predetermined number of failed reattempts.

5. Method according to one of the preceding claims, **characterized in that** an error is identified when a calculation error occurs in the generation of the key.

6. Method according to one of the preceding claims, **characterized in that** the first value sequence is based on a random number and that an error is identified if a number of random numbers available therefor or a quality of one or more random numbers available therefor is lower than a predetermined value.

7. Method according to Claim 6, **characterized in that**, in the case of an identified error on account of an insufficient quality of a random number, a random number of reduced quality is used as a replacement.

8. Method according to one of the preceding claims, **characterized in that**, in the case of an identified error, the transmission of first value sequences is ended as error reaction.

9. Method according to one of the preceding claims, **characterized in that**, in the case of an identified error, a message is sent to a safety module or to a computation unit of the first circuit arrangement (21) as error reaction.

10. Method according to one of the preceding claims, **characterized in that**, in the case of an identified error, key generation does not take place and the further communication of the first circuit arrangement (21) takes place in a non-secured manner or in a secured manner with a previous key.

11. Method according to one of the preceding claims, **characterized in that**, in the case of an identified error, the generation of the key in the case of a key length below the predetermined key length is interrupted and the further communication of the first circuit arrangement is secured with said incomplete key.

12. Method according to one of the preceding claims, **characterized in that**, in the case of an identified error, a message is sent from the first circuit arrangement (21) to at least the second circuit arrangement (22) as error reaction, in particular as error message or for error resolving.

13. Method according to one of the preceding claims, **characterized in that** the first circuit arrangement (21) and the second circuit arrangement (22) communicate with a third circuit arrangement (23) in order to establish a group key based on generated keys, and **in that** an error is identified when a group key has still not been established successfully after a predetermined time after the start of the key generation or after a predetermined time after the end of the key generation or at a predetermined absolute time or after a predetermined number of attempts.

14. Method according to one of the preceding claims, **characterized in that** the first circuit arrangement (21) has at least one communication module (50) for communication via the transmission channel (30) and has at least one further module (60) for the synchronous transmission of the first value sequence and **in that** the communication module (50) monitors the further module (60) .

15. Method according to Claim 14, **characterized in that** an error is identified by the communication module (50) when the further module (60) transmits too often or transmits particular messages too often.

16. Method according to either of Claims 14 and 15, **characterized in that** the communication module (50) in the case of an identified error prompts separation of the further module (60) from the transmission channel (30), in particular by deactivating the further module (60) by means of configuring or by interrupting a transmission signal of the further module (60) by means of a hardware circuit.

17. Method according to one of the preceding claims, **characterized in that** the first circuit arrangement (21) has at least one communication module (50) for communication via the transmission channel (30) and has at least one further module (60) for the synchronous transmission of the first value sequence and **in that** the further module (60) monitors the communication module (50) .

18. Method according to Claim 17, **characterized in that** an error is identified by the further module (60) when the communication module (50) transmits too often or transmits particular messages too often.

19. Method according to either of Claims 17 and 18, **characterized in that** the communication module (50) in the case of an identified error prompts separation of the further module (60) from the transmission channel (30), in particular by deactivating the communication module (50) by means of configuring or by interrupting a transmission signal of the communication module (50) by means of a hardware circuit.

20. Method according to one of the preceding claims, **characterized in that** the transmission channel (30) is part of a CAN, TTCAN, CAN-FD, LIN or I2C bus system, **in that** the first value sequence and the second value sequence are made up of first and second values and **in that** the first value is a recessive bus level and **in that** the second value is a dominant bus level.

21. Computer program, which, when loaded and executed on a computer, is configured to carry out the steps of a method according to one of Claims 1 to 20.

22. Circuit arrangement, in particular microcontroller, which is configured to carry out the steps of a method according to one of Claims 1 to 20.

## Revendications

1. Procédé de génération d'une clé dans un premier agencement de circuits (21), en particulier dans un microcontrôleur, dans lequel le premier agencement de circuits déclenche la transmission d'au moins une première séquence de valeurs sur un canal de transmission (30) de façon au moins sensiblement synchronisée avec une transmission d'au moins une deuxième séquence de valeurs par un deuxième agencement de circuits (22) et dans lequel le premier agencement de circuits (21) détermine un secret pour la génération de la clé sur la base de ladite au moins une première séquence de valeurs et sur la base de la superposition de ladite au moins une première séquence de valeurs et de ladite au moins une deuxième séquence de valeurs sur le canal de transmission (30), dans lequel le premier agencement de circuits (21) est surveillé pour rechercher des erreurs, **caractérisé en ce que**

   - le secret déterminé représente une troisième séquence de valeurs et une erreur est détectée lorsque la longueur de la troisième séquence de valeurs devient inférieure à une longueur prédéterminée,
   - une erreur est détectée lorsque, après un temps prédéterminé après le début de la génération de la clé ou à un instant absolu prédéterminé ou après un nombre prédéterminé de premières séquences de valeurs transmises, aucune clé ayant la longueur prédéterminée n'a encore été générée et

- une erreur est détectée lorsque, après un temps prédéterminé après le début de la génération de la clé ou après un temps prédéterminé après la fin de la génération de la clé ou à un instant absolu prédéterminé ou après un nombre prédéterminé de tentatives, aucune correspondance réussie de la clé générée entre le premier agencement de circuits (21) et le deuxième agencement de circuits (22) ne s'est réalisée.

2. Procédé selon la revendication 1, **caractérisé en ce que** des fonctions de génération de clés, en particulier lors de la transmission de la première séquence de valeurs ou lors de la détermination du secret ou lors de la génération de la clé, sont surveillées dans le premier agencement de circuits (21).

3. Procédé selon l'une des revendications précédentes, **caractérisé en ce que**, dans le cas où le secret déterminé représente une troisième séquence de valeurs et qu'une erreur est détectée, lorsque la longueur de la troisième séquence de valeurs devient inférieure à une longueur prédéterminée, une réaction à l'erreur ne se produit que lorsque la troisième séquence de valeurs devient supérieure à la longueur prédéterminée un nombre prédéterminé de fois.

4. Procédé selon l'une des revendications précédentes, **caractérisé en ce que**, dans le cas où l'erreur est détectée et où aucune clé ayant la longueur prédéterminée n'a encore été générée, une nouvelle tentative de génération de clé est effectuée et **en ce qu'**une réaction à l'erreur correspondante ne se produit qu'après l'échec d'un nombre prédéterminé de nouvelles tentatives.

5. Procédé selon l'une des revendications précédentes, **caractérisé en ce qu'**une erreur est détectée lorsqu'une erreur de calcul se produit lors de la génération de la clé.

6. Procédé selon l'une des revendications précédentes, **caractérisé en ce que** la première séquence de valeurs est basée sur un nombre aléatoire et **en ce qu'**une erreur est détectée dans le cas où un nombre de valeurs aléatoires disponibles à cet effet ou dans le cas où une qualité d'une ou de plusieurs valeurs aléatoires disponibles à cet effet, est inférieur(e) à une valeur prédéterminée.

7. Procédé selon la revendication 6, **caractérisé en ce que**, dans le cas où une erreur est détectée du fait d'une qualité insuffisante d'un nombre aléatoire, un nombre aléatoire de qualité réduite est utilisé en remplacement.

8. Procédé selon l'une des revendications précédentes, **caractérisé en ce que**, dans le cas où une erreur est détectée, une interruption de la transmission des premières séquences de valeurs est effectuée en tant réaction à l'erreur.

9. Procédé selon l'une des revendications précédentes, **caractérisé en ce que**, dans le cas où une erreur est détectée, une notification est envoyée à un module de sécurité ou à une unité de calcul du premier agencement de circuits (21) en tant que réaction à l'erreur.

10. Procédé selon l'une des revendications précédentes, **caractérisé en ce que**, dans le cas où une erreur est détectée, aucune clé n'est générée et la communication ultérieure du premier agencement de circuits (21) est effectuée de manière non sécurisée ou de manière sécurisée au moyen d'une clé antérieure.

11. Procédé selon l'une des revendications précédentes, **caractérisé en ce que**, dans le cas où une erreur est détecté, la génération de la clé est interrompue à une longueur de clé inférieure à la longueur de clé prédéterminée et la communication ultérieure du premier agencement de circuits est effectuée de manière sécurisée à l'aide de ladite clé incomplète.

12. Procédé selon l'une des revendications précédentes, **caractérisé en ce que**, dans le cas où une erreur est détectée, une notification du premier agencement de circuits (21) est envoyée à au moins le deuxième agencement de circuits (22) en tant que réaction à l'erreur, en particulier sous la forme d'une notification d'erreur ou à des fins de correction de l'erreur.

13. Procédé selon l'une des revendications précédentes, **caractérisé en ce que** le premier agencement de circuits (21) et le deuxième agencement de circuits (22) communiquent avec un troisième agencement de circuits (23) afin d'établir une clé de groupe sur la base de clés générées, et **en ce qu'**une erreur est détectée lorsque, après un temps prédéterminé après le début de la génération de la clé ou après un temps prédéterminé après la fin de la génération de la clé ou à un instant absolu prédéterminé ou après un nombre prédéterminé de tentatives, aucune clé de groupe n'a encore été établie avec succès.

14. Procédé selon l'une des revendications précédentes, **caractérisé en ce que** le premier agencement de circuits (21) comporte au moins un module de communication (50) pour la communication par l'intermédiaire du canal de transmission (30) et comporte au moins un module supplémentaire (60) pour la transmission synchrone de la première séquence de valeurs et **en ce que** le module de communication (50) surveille le module supplémentaire (60).

15. Procédé selon la revendication 14, **caractérisé en ce qu'**une erreur est détectée par le module de communication (50) si le module supplémentaire (60) est trop souvent en émission ou émet trop souvent des messages déterminés.

16. Procédé selon l'une des revendications 14 ou 15, **caractérisé en ce que**, dans le cas où une erreur est détectée, le module de communication (50) déclenche une séparation du module supplémentaire (60) d'avec le canal de transmission (30), en particulier par désactivation du module supplémentaire (60) par l'intermédiaire d'une configuration ou par interruption d'un signal de transmission du module supplémentaire (60) par l'intermédiaire d'un circuit matériel.

17. Procédé selon l'une des revendications précédentes, **caractérisé en ce que** le premier agencement de circuits (21) comporte au moins un module de communication (50) pour la communication par l'intermédiaire du canal de transmission (30) et au moins un module supplémentaire (60) pour la transmission synchronisée de la première séquence de valeurs et **en ce que** le module supplémentaire (60) surveille le module de communication (50).

18. Procédé selon la revendication 17, **caractérisé en ce qu'**une erreur est détectée par le module supplémentaire (60) si le module de communication (50) est trop souvent en émission ou émet trop souvent des messages déterminés.

19. Procédé selon l'une des revendications 17 ou 18, **caractérisé en ce que** le module supplémentaire (60), dans le cas où une erreur est détectée, déclenche une séparation du module de communication (50) d'avec le canal de transmission (30), en particulier par désactivation du module de communication (50) par l'intermédiaire d'une configuration ou par interruption du signal de transmission du module de communication (50) par l'intermédiaire d'un circuit matériel.

20. Procédé selon l'une des revendications précédentes, **caractérisé en ce que** le canal de transmission (30) fait partie d'un système de bus CAN, TTCAN, CANFD, LIN ou 12C, **en ce que** la première séquence de valeurs et la deuxième séquence de valeurs sont constituées de premières et de deuxièmes valeurs, **en ce que** la première valeur est un niveau de bus récessif et **en ce que** la deuxième valeur est un niveau de bus dominant.

21. Programme d'ordinateur qui, lorsqu'il est chargé et exécuté sur un ordinateur, est conçu pour mettre en œuvre les étapes d'un procédé selon l'une des revendications 1 à 20.

22. Agencement de circuits, en particulier microcontrôleur, qui est conçu pour mettre en œuvre les étapes d'un procédé selon l'une des revendications 1 à 20.

Fig. 1

Fig. 2

Fig. 3

```
┌─────────────┐
│     41      │
└─────────────┘
       │
       ▼
┌─────────────┐
│     42      │
└─────────────┘
       │
       ▼
┌─────────────┐
│   43, 44    │
└─────────────┘
       │
       ▼
┌─────────────┐
│   45, 46    │
└─────────────┘
       │
       ▼
┌─────────────┐
│     47      │
└─────────────┘
       │
       ▼
┌─────────────┐
│     48      │
└─────────────┘
       │
       ▼
┌─────────────┐
│     49      │
└─────────────┘
```

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009002396 A1
- DE 102009045133 A1
- DE 102014208975 A1
- DE 102014209042 A1
- DE 102015207220 A1
- DE 102013221583 A1